# EUROPÄISCHE PATENTSCHRIFT

(11) **EP 1 798 333 B1**
(45) Veröffentlichungstag und Bekanntmachung des Hinweises auf die Patenterteilung: **12.12.2012**
(21) Anmeldenummer: 06122733.6
(22) Anmeldetag: 23.10.2006
(51) Int. Cl.: D21D 5/26, B01D 19/00, D21H 23/48

(54) **Vorrichtung zum Entgasen eines flüssigen bis pastösen Mediums, insbesondere einer Streichfarbe**
Apparatus for degassing a liquid or pasty medium, in particular a coating colour
Appareil pour dégazer une substance liquide ou pâteuse, en particulier une couleur d'enduction

(30) Priorität: 16.12.2005 DE 102005060853
(43) Veröffentlichungstag der Anmeldung: 20.06.2007
(73) Patentinhaber: Voith Patent GmbH, 89522 Heidenheim (DE)
(72) Erfinder: Fröhlich, Uwe, 89231 Neu-Ulm (DE); Kolhagen, Tobias, 88212 Ravensburg (DE)

(56) Entgegenhaltungen:
- EP-A1- 0 517 223
- DE-A1- 2 832 071
- DE-A1- 19 911 492
- DE-A1-102005 017 952
- US-A- 1 667 139
- US-A- 3 078 649

## Beschreibung

Die Erfindung betrifft eine Vorrichtung zum Entgasen eines flüssigen bis pastösen Mediums, insbesondere einer Streichfarbe zum Beschichten von Papier oder Karton, gemäß dem Oberbegriff des Anspruchs 1.
Eine derartige Vorrichtung ist aus der DE-A-28 32 071 bekannt.

Die Vorrichtung umfasst einen Vakuumbehälter, der einen Einlass für das zu entgasende Medium sowie einen Vakuumanschluss bzw. Unterdruckerzeuger und einen Auslass für das entgaste Medium aufweist.

Bei dem Medium handelt es sich insbesondere um Streichfarbe, mit der vor allem eine Papier-, Karton- oder andere Faserstoffbahn gestrichen werden soll. Die Streichfarbe besteht im Allgemeinen aus wässriger Pigmentdispersion. Diese wird mit einer bestimmten Filmdicke möglichst gleichmäßig aufgetragen und getrocknet. Ein solcher auch als Strich bezeichneter Auftrag, verbessert die Bedruckbarkeit sowie die optischen Eigenschaften der Bahn.

Während des Aufbereitungsprozesses des Mediums, somit zum Beispiel der Streichfarbe, gelangt Luft in das flüssige oder pastöse Medium. Hieraus bilden sich Blasen, die nach dem Streichen der Bahn zerplatzen und freie Stellen hinterlassen. Der Strich ist damit nicht mehr einheitlich. Dabei stören bereits Mikroblasen mit einem Durchmesser von wenigen Mikrometern, vor allem bei Strichfilmen geringer Stärke.

Um einen optimalen Strich mit geschlossener Strichfläche und großer Gleichmäßigkeit zu erzeugen, ist daher ein Entgasen beziehungsweise Entlüften unerlässlich. Hierzu sind zahlreiche Verfahren bekannt geworden. Ein wichtiges Verfahren ist die Vakuumentgasung beziehungsweise Vakuumentlüftung.

Die DE 199 39 275 A1, aber auch die DE 10 2005 017 952 A1 beschreiben ein solches Verfahren, wobei bei letztgenannter Druckschrift die zu entgasende Streichfarbe auf eine Temperatur in der Nähe ihres Siedepunktes, insbesondere auf ca. 40 bis 60° C, und auf einen Druck von ca. 20 bis 100 mbar gebracht wird. Hierdurch wird ein Volumenstrom an Gasblasen entgegen der Förderrichtung der Streichfarbe erzeugt. Durch den erhöhten Dampfdruck im Vakuumentgaser entsteht ein Gasstrom. Dieser sorgt dafür, dass kleine eingeschlossene Gasblasen mitgerissen und an die Grenzfläche zwischen Streichfarbe und Luft befördert werden, wo sie durch Unterdruck entfernt werden.

Weitere Verfahren beruhen im Wesentlichen auf einer mechanischen Wirkung und benutzen das bekannte Prinzip eines Hydrozyklons. Siehe EP 1 078 670 A1, WO 03/00 2227 A1, EP 0 735 913 B1, DE 40 09 042 C2.

Die Anforderungen an die Entgasung von Medien der genannten Art sind weiterhin gestiegen. Dies liegt daran, dass die zu entgasenden Medien inzwischen Eigenschaften haben, die eine Entgasung schwieriger machen. Hierzu gehören beispielsweise höhere Feststoffgehalte und höhere Viskositäten. Auch sind die Qualitätsanforderungen an die Strichqualität inzwischen gestiegen oder die Art des Beschichtens verlangt ein besonders weitgehend entgastes Medium (z.B. die Vorhangbeschichtung).

Der Erfindung liegt daher die Aufgabe zugrunde, eine Vorrichtung anzugeben, womit eine noch bessere Entgasung der genannten Medien erzielbar ist, und zwar auch bei schwierig zu entgasenden Medien. Auch sollen die erforderlichen Vorrichtungen möglichst wenig Bauraum beanspruchen, baulich so einfach wie möglich sein, und kurze Prozessdauern ermöglichen.

Die Aufgabe wird erfindungsgemäß mit einer Vorrichtung entsprechend dem Anspruch 1 gelöst.

Dadurch, dass das zu entgasende Medium den Vakuumbehälter in annähernd vertikaler Richtung von oben nach unten durchströmt und dabei mehrfach und einander abwechselnd einer hohen Beschleunigung und danach einer Verlangsamung der Beschleunigung unterworfen wird, wird jedes Mal eine neue Oberfläche geschaffen, die sich so besser als bisher entgasen lässt.

Dadurch, dass die Entgasung zudem noch unter Vakuum durchgeführt wird, kann das als Dünnschicht ablaufende Medium ganz allmählich und fortschreitend Gasanteile verlieren und dadurch praktisch gasfrei werden. Praktisch gasfrei bedeutet dabei, dass geringe Restmengen an gelöstem Gas je nach Mediumsart im Medium realistischer Weise noch enthalten sind.

Folgender Entgasungsablauf hat sich in überraschender Weise als besonders effektiv herausgestellt:
Gemäß einer ersten Variante erfolgt das folgendermaßen :
   1. Das zu entgasende Medium gelangt von einem Einlass her zunächst auf eine erste Ablauffläche, von der es in Zentrumsrichtung des Vakuumbehälters auf einen koaxial darunter angeordneten Drehteller auftrifft.
   2. Auf dem Drehteller wird das Medium beschleunigt und unter Wirkung von Fliehkräften an die Innenwandung des Vakuumbehälters geschleudert und dabei abgebremst.
   3. Von der Innenwandung aus gelangt das nun bereits teilentgaste Medium erneut an eine von der Innenwandung abzweigende Ablauffläche, wo es aufgrund der beim Ablaufen entstehenden Reibung weiter verlangsamt und auch hierbei weiter entgast wird.
   4. Von der Ablauffläche aus, in Zentrumsnähe des Vakuumbehälters, gelangt das Medium wiederum auf einen weiteren Drehteller, wo es ebenfalls wieder - wie oben beschrieben- beschleunigt wird.

Dieser Ablauf kann beliebig oft je nach Anforderung wiederholt werden und ist abhängig vor allem vom Durchfluss und der Viskosität des zu entgasenden Mediums.

Dieser Ablauf kann auch gemäß einer zweiten Variante erfolgen bei umgedrehter Anordnung bzw. Reihenfolge der Drehteller und Ablaufflächen.

Vorteilhaft ist es, wenn bei der Entgasung das zu entgasende Medium eine Temperatur von ca. 30 -50° C aufweist.

Damit das Medium bis an den Rand des Drehtellers beschleunigt und bis hin zur Innenwand des Vakuumbehälters geschleudert wird, werden Umdrehungsgeschwindigkeiten der Drehteller zwischen 100 und 5000 min⁻¹, vorzugsweise 100 bis 1000 min⁻¹ vorgeschlagen.

Außerdem wird ein absoluter Druck in der Vakuumkammer zwischen 10 und 300mbar, insbesondere zwischen 30 und 100mbar vorgeschlagen, wodurch erreicht wird, das während des Entgasungsablaufes aufsteigende Gasblasen zerplatzen und dadurch das Medium von diesen befreit wird.

Das so hergestellte praktisch gasfreie Medium, vor allem pigmenthaltige Streichfarbe, kann nun einer dem Entgaser nachgeordneten Beschichtungseinrichtung zugeführt werden. Bevorzugt ist dabei an ein Vorhang- Auftragswerk als Beschichtungseinrichtung gedacht. Aufgrund der Erfindung können erstmalig gut entgaste bzw. entlüftete, hochviskose Auftragsmedien mit Hilfe des Curtain Coatings (Vorhang- Streichens) auf eine laufende Papier-, Karton- oder andere Bahn aufgebracht werden.

Gemäß Anspruch 1 ist ein Vakuumbehälter (Entgaser) vorgesehen, der wenigstens einen Einlass für das zu entgasende Medium sowie einen Vakuumanschluss bzw. Unterdruckerzeuger und einen Auslass für praktisch gasfreies Medium aufweist.

Erfindungsgemäß ist der Vakuumbehälter rotationssymmetrisch ausgebildet. Im Inneren des Vakuumbehälters ist eine zentrisch angeordnete, vertikale Antriebswelle angeordnet, die mehrere koaxial angeordnete Drehteller trägt. Die Drehteller bilden mit ihrem Außenumfang zur Behälterinnenwandung jeweils einen Überlaufspalt. Jeweils oberhalb eines Drehtellers befindet sich eine kegelstumpfförmige, feststehende Ablauffläche, die von der Behälterinnenwand ausgeht.

In einer weiteren Ausführungsform mit umgekehrter Einbauweise der Drehteller und Ablaufflächen befindet sich jeweils eine Ablauffläche unterhalb des jeweiligen Drehtellers.

Ein Drehteller und eine Ablauffläche bilden miteinander einen definierten Entgasungsraum, der im Weiteren als eine Kaskadenstufe bezeichnet werden soll.

Hinsichtlich der Entgasungswirkung ist es sehr vorteilhaft, wenn mehrere koaxial übereinander geordnete Kaskadenstufen -also mit mehreren Drehtellen und zugeordneten Ablaufflächen- im Vakuumbehälter vorgesehen sind, weil dadurch auf engstem Raum große Ablaufflächen, d.h. große Oberflächen und außerdem sehr dünne zu entgasende Schichten des Mediums geschaffen werden.

Demzufolge können in vorteilhafter Weise eine beliebige Anzahl an Kaskadenstufen gewählt werden. Mindestens aber zwei Kaskadenstufen sollten koaxial übereinander angeordnet sein, um den nötigen Effekt, vor allem bei hochviskosen Medien, die sich ansonsten schlecht entgasen lassen, erreichen zu können.
Dabei können die einzelnen Kaskadenstufen in derselben Größe, d.h. Höhe hergestellt sein.

Im Übrigen ist vorgesehen, dass jede Ablauffläche zur Antriebswelle hin geneigt ausgebildet ist. Überdies besteht eine Übertrittsöffnung zwischen Ablauffläche und der Antriebswelle, so dass das teilentgaste Medium zum darunter drehenden Drehteller gelangen kann.

Jeweils ein Drehteller ist an seinem Außenumfang mit einer zylindrischen Siebfläche versehen. Das Medium wird aufgrund der Zentrifugalkraft vom Drehteller aus durch dieses Sieb gedrückt und dabei weiter entgast, bevor es bis an die Behälterinnenwand der jeweiligen Kaskadenstufe geschleudert wird, wo es noch weiter entgast.

Eine weitere vorteilhafte Ausgestaltung kann darin bestehen, dass die Drehteller im Bereich um die Antriebswelle herum keine scharfen Übergang, sondern einen sanften Übergang zur Antriebswelle hin bilden. Dieser sanfte Übergang kann beispielsweise in Form einer ringförmigen kehligen Phase oder einer Anschrägung gebildet sein. Denkbar ist auch eine im Querschnitt gesehene kegelige Form des Drehteller, wobei die Spitze des Kegels zur Achse der Antriebswelle hin verläuft.
Durch diese Ausgestaltungen erreicht man, dass sich im Bereich des Zentrums keine Mediumsteilchen ansetzen und festbacken können.

Zu erwähnen ist noch, dass die Antriebswelle von einer Antriebseinheit angetrieben ist, deren Drehzahl und damit die der Drehteller auf 100 bis 5000 min-1, vorzugsweise 100 bis 1000 min⁻¹ einstellbar ist.

Im Übrigen ist der Vakuumbehälter zur Abführung des praktisch gasfreien Mediums über den Auslass in seinem unteren Teil konisch oder mit schräger Bodenfläche ausgebildet.

Der Auslass für das praktisch gasfreie Medium ist außerdem erfindungsgemäß mit einer Mediumszuleitung für eine nachgeordnete Beschichtungseinrichtung, insbesondere für ein Vorhang- Auftragswerk verbunden.

Die erfindungsgemäße Lösung zeichnet sich durch eine einfache Vorrichtung aus. Dadurch, dass das zu entgasende Medium über mehrere Kaskaden läuft, wird es auch mehrfach beschleunigt und abgebremst. Infolgedessen bilden sich mehrfach neue Oberflächen desselben Mediums, wodurch die Entgasung beschleunigt wird.

Nachfolgend soll die Erfindung anhand eines Ausführungsbeispieles beschrieben werden.

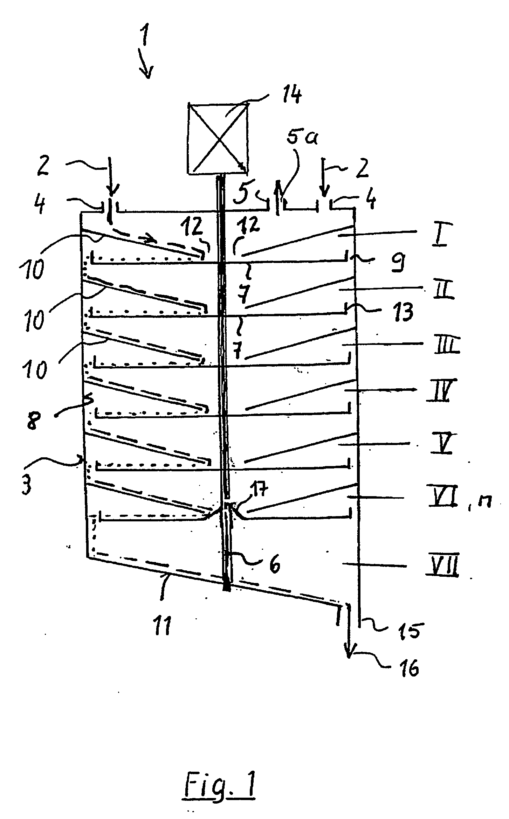

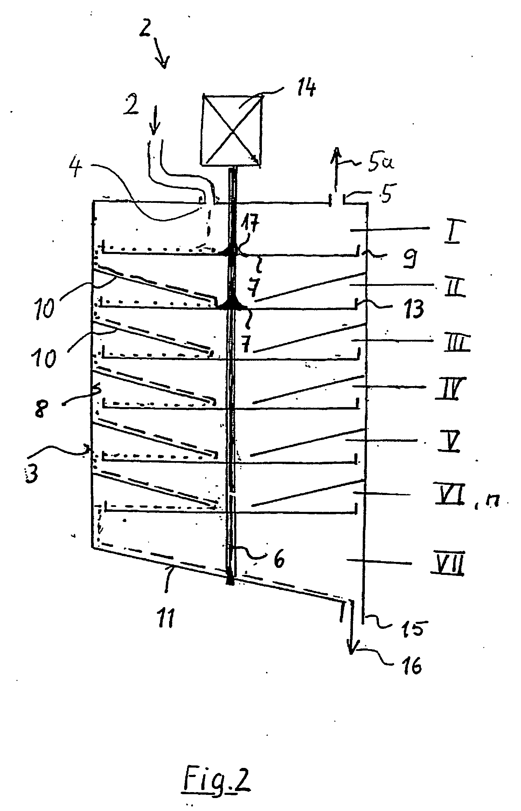

Figur 1 und 2 zeigt jeweils einen grob schematischen Querschnitt einer erfindungsgemäßen Vorrichtung zum Entgasen jeweils mit unterschiedlicher Folge an Behältereinbauten

In beiden Figuren wurden gleiche Bauteile auch mit gleichem Bezugszeichen versehen.

In der **Figur 1** ist eine Vorrichtung 1 und in **Figur 2** eine Vorrichtung 2 dargestellt, die beide dem Entgasen eines Auftrags- bzw. Streichmediums 2 dienen. Im vorliegenden Falle handelt es sich um eine hochviskose Streichfarbe zur Veredelung einer nicht mit dargestellten laufenden Papier- oder Kartonbahn.

Beide Vorrichtungen umfassen einen rotationssymmetrischen Vakuumbehälter 3, der hier ca. 2m hoch ist und einen Durchmesser von ca. 0,5 bis 1 m aufweist.

Am Deckel des Behälters sind bei **Figur 1** mehrere Einlässe 4, bei **Figur 2** nur ein Einlass 4 für das zu entgasende Medium 2 und außerdem jeweils ein Vakuumanschluss bzw. Unterdruckerzeuger 5 vorgesehen.

Im Vakuumbehälter 3 befindet sich jeweils eine zentrisch angeordnete, vertikale Antriebswelle 6, die mehrere koaxial angeordnete Drehteller 7 trägt. Die Drehteller 7 bilden jeweils mit ihrem Außenumfang zur Behälterinnenwandung 8 jeweils einen Überlaufspalt 9.
Jeweils oberhalb der Drehteller 7 bei **Figur 1** und bei **Figur 2** unterhalb des Drehtellers - ist eine kegelstumpfförmige, d.h. nach unten geneigte, feststehende Ablauffläche 10 angeordnet. Die Ablauffläche 10 zweigt von der Behälterinnenwandung 8 ab.

Ein Drehteller 7 und eine Ablaufplatte 10 bilden miteinander eine Kaskadenstufe.

Dabei ist es je nach Anforderung , d.h. entsprechend der Menge an zu entgasendem Medium so, dass eine gewünschte Anzahl n an Kaskadenstufen I, II, III usw. koaxial übereinander angeordnet ist. In den gezeigten Beispielen sind es einschließlich des als Ablauffläche ausgebildeten schrägen Bodens 11 und dem Bereich des Einlasses 4 jeweils sieben Stück.
Mindestens sollten es aber zwei Stufen, z.B. Kaskadenstufe I und II oder I und VII sein, die koaxial übereinander angeordnet sind.

Im Beispiel gemäß der Figuren 1 und 2 ist ersichtlich, dass die einzelnen Kaskadenstufen I bis VI bzw. 1 bis n in derselben Höhe hergestellt sind.
Die einzelnen Kaskadenstufen I bis n lassen sich auf Vorrat fertigen und je nach zu entgasender Mediumsart beliebig zum Vakuumbehälter 3 auf- oder auch umbauen. Es versteht sich, dass entsprechende nicht den Figuren 1 und 2 dargestellte Dichtungen dabei zwischen den einzelnen Stufen anzuordnen sind.

Jede Ablauffläche 10 ist wie gesagt zur Antriebswelle 6 hin geneigt ausgebildet und lässt auch eine ausreichend große Übertrittsöffnung 12 zwischen sich und der Antriebswelle 6 frei, so das das ablaufende und bereits teilentgaste Medium 2 das Zentrum des nächsten darunter liegenden Drehtellers 7 erreichen kann.

Bei besonders hochviskosen Medien hat es sich erwiesen, dass die Anordnung einer zylindrischen Siebfläche 13 am Außenumfang des Drehtellers 7 vorteilhaft ist, weil beim Abschleudern des Mediums vom Drehteller das Medium aufgrund der Zentrifugalkräfte durch dieses Sieb 13 gedrückt und dadurch noch besser entgast wird.

Im Übrigen ist die Antriebswelle 6 und damit die Drehteller 7 aller vorhandenen Kaskadenstufen I bis n von einer Antriebseinheit 14 angetrieben, deren Drehzahl im Beispiel ca. 1000 min⁻¹ eingestellt ist.

Außerdem weisen die Drehteller 7 im Bereich um die Antriebswelle 6 herum keine scharfen Übergänge, sondern jeweils einen sanften Übergang 17 zur Antriebswelle 6 hin auf. Dieser sanfte Übergang 17 ist in beiden Figuren nur an einem oder zwei Drehtellern beispielhaft eingezeichnet. Bei **Figur 1** ist nur am unteren Drehteller als sanfter Übergang 17 eine schräge Anfasung eingezeichnet, die aber bei allen Drehtellern vorhanden ist. Bei der in **Figur 2** gezeigten Variante ist dagegen eine mit Radius versehene kehlige Phase gewählt, die nur bei den oberen beiden Drehtellern 7 stellvertretend für alle eingezeichnet ist.

Die Vorrichtung 1 gemäß **Figur 1** funktioniert folgender Maßen:

Das zu entgasende Medium 2 gelangt vom Einlass 4 her zunächst auf die erste Ablauffläche 10 der ersten Kaskadenstufe I, von der es in dünner Schicht in Zentrumsrichtung des Vakuumbehälters 3 und danach auf den koaxial darunter angeordneten Drehteller 7 auftrifft. Dort wird das Medium unter Wirkung von starken Fliehkräften an die Innenwandung 8 des Vakuumbehälters 3 im Bereich der ersten Kaskadenstufe I geschleudert und bei Aufprall abgebremst. Von da aus wird das Medium erneut einer Ablauffläche 10 (der nächsten Kaskadenstufe II) zugeführt und auf der Ablauffläche verlangsamt.

Die Funktionsweise der Vorrichtung 2 aus **Figur 2** ist prinzipiell gleich wie die der Figur 1. Ein Unterschied besteht nur darin, dass das zu entgasende Medium 2 von dem einen Einlass 4 her zunächst nicht auf die erste Ablauffläche 10, sondern zuerst zentrumsnah auf den ersten Drehteller 7 der ersten Kaskadenstufe I gelangt und von da aus über den äußeren Überlaufspalt 9 zur ersten Ablauffläche 10. Von dieser strömt das Medium genau wie bei Figur 1 in dünner Schicht in Zentrumsrichtung des Vakuumbehälters 3 und gelangt danach weiter auf den koaxial darunter angeordneten Drehteller 7, der ebenfalls wie bei Figur 1 unter Wirkung von starken Fliehkräften das Medium an die Innenwandung 8 des Vakuumbehälters 3 schleudert Beim Aufprall wird das Medium abgebremst. und von da aus der nächsten Ablauffläche 10 zugeführt. Dies wird auch hierbei sooft wiederholt, wie Kaskadenstufen vorhanden sind, wodurch das Medium auf engstem Raum, aber äußerst effektiv von Kaskadenstufe zu Kaskadenstufe weiter entgast wird

Das Durchlaufen der Kaskadestufen wird bei beiden Vorrichtungen 1 und 2 sooft wiederholt, wie Kaskadenstufen (also n-mal bei n- Stufen) vorhanden sind und erfolgt in Abhängigkeit der Art des zu entgasenden bzw. zu entlüftenden Mediums.

Zur Verdeutlichung ist in den Figuren das Abbremsen des Mediums mit gestrichelten Linien und das Beschleunigen mit gepunkteten Linien dargestellt. Insgesamt ergibt sich eine Durchströmung des Vakuumbehälters 3 in vertikaler Richtung von oben nach unten, während das dabei abgetrennte Gas 5a nach oben strömt und über den Unterdruckerzeuger 5 abgezogen wird.

Bei der Entgasung weist das zu entgasende Medium 2 eine Temperatur von 30 -50° C auf, wodurch es sich unter Vakuum besser entgasen lässt..

Am Boden 11 des Behälters 3 der beiden Vorrichtungen 1 und 2 ist jeweils ein Auslass 15 für das praktisch gasfreie Medium 16 vorhanden. Über eine nicht dargestellte Mediumszuleitung kann nun das entgaste Medium einer nachgeordneten, aber ebenfalls nicht mit dargestellten Beschichtungseinrichtung, zugeführt werden.
Das sehr effektiv entgaste Medium eignet sich besonders für ein Vorhang-Auftragswerk, weil dieses eine hohe Auftragsqualität nur mit in hohem Maße entlüftetem Streichmedium liefern kann. Bei hochviskosen Medien waren bisher dafür Grenzen gesetzt.

### Bezuaszeichenliste

- 1: Vorrichtung
- 2: zu entgasendes Medium
- 3: Vakuumbehälter
- 4: Einlass
- 5: Vakuumanschluss bzw. Unterdruckerzeuger
- 5a: Gas
- 6: Antriebswelle
- 7: Drehteller
- 8: Behälterinnenwandung
- 9: Überlaufspalt
- 10: Ablaufplatte
- 11: Boden
- 12: Übertrittsöffnung
- 13: Siebfläche
- 14: Antriebseinheit
- 15: Auslass
- 16: praktisch gasfreies Medium
- 17: sanfter Übergang

## Patentansprüche

1. Vorrichtung zum Entgasen eines flüssigen bis pastösen Mediums (2), insbesondere einer Streichfarbe zum Beschichten von Papier oder Karton mit einem Vakuumbehälter (3), der einen Einlass (4) für das zu entgasende Medium (2) sowie einen Vakuumanschluss bzw. Unterdruckerzeuger (5) und einen Auslass (15) für entgastes Medium (16) aufweist, wobei das zu entgasende Medium (2) den Vakuumbehälter (3) von oben nach unten durchströmt und dabei mehrfach und einander abwechselnd beschleunigt und verlangsamt wird und der Vakuumbehälter (3) rotationssymmetrisch ausgebildet ist und sich im Vakuumbehälter (3) eine zentrisch angeordnete, vertikale Antriebswelle (6) befindet, die koaxial angeordnete Drehteller (7) trägt, die mit ihrem Außenumfang zur Behälterinnenwandung (8) einen Überlaufspalt (9) bilden und die jeweils einer mit koaxial angeordneten, feststehenden und zur Antriebswelle (6) geneigten Ablauffläche (10), die von der Behälterinnenwand (8) ausgeht eine Kaskadenstufen (1 bis n) bilden, **dadurch, gekennzeichnet, dass** jeweils ein Drehteller (7) an seinem Außenumfang mit einer zylindrischen Siebfläche (13) versehen ist.

2. Vorrichtung nach Anspruch 1,
**dadurch gekennzeichnet, dass**
die Ablauffläche (10) oberhalb des Drehtellers (7) angeordnet ist.

3. Vorrichtung nach Anspruch 1,
**dadurch gekennzeichnet, dass**
die Ablauffläche (10) unterhalb des Drehtellers (7) angeordnet ist.

4. Vorrichtung nach Anspruch 1 sowie Anspruch 2 oder 3,
**dadurch gekennzeichnet, dass**
eine gewünschte Anzahl (n) an Kaskadenstufen, mindestens aber zwei Stufen koaxial übereinander angeordnet im Vakuumbehälter (3) einbaubar sind.

5. Vorrichtung nach wenigstens einem der Ansprüche 1 bis 4,
**dadurch gekennzeichnet, dass**
die einzelnen Kaskadenstufen (I bis n) in der selben Höhe hergestellt sind.

6. Vorrichtung nach wenigstens einem der Ansprüche 1 bis 5,
**dadurch gekennzeichnet, dass**
jede Ablauffläche (10) zur Antriebswelle (6) hin geneigt ausgebildet ist und eine Übertrittsöffnung (12) zwischen sich und der Antriebswelle (6) freilässt.

7. Vorrichtung nach wenigstens einem der Ansprüche 1 bis 6,
**dadurch gekennzeichnet, dass**
jeweils ein Drehteller (7) mit einem sanften Übergang (17) zur Antriebswelle (6) hin versehen ist, welcher Übergang (17) in Form einer ringförmigen kehligen Phase oder einer Anschrägung gebildet ist.

8. Vorrichtung nach wenigstens einem der Ansprüche 1 bis 7,
**dadurch gekennzeichnet, dass**
die Antriebswelle (6) von einer Antriebseinheit (14) angetrieben ist, deren Drehzahl auf 100 bis 5000 min⁻¹, vorzugsweise 100 bis 1000 min⁻¹ einstellbar ist.

9. Vorrichtung nach einem der Ansprüche 1 bis 8,
**dadurch gekennzeichnet, dass**
der Vakuumbehälter (3) zur Abführung des praktisch gasfreien Mediums (16) über den Auslass (15) in seinem unteren Teil konisch oder mit schräger Bodenfläche (11) ausgebildet ist.

## Claims

1. Apparatus for degassing a liquid to pasty medium (2), in particular a coating ink for coating paper or cardboard with a vacuum container (3) which has an inlet (4) for the medium (2) to be degassed and a vacuum connection or vacuum generator (5) and an outlet (15) for degassed medium (16), the medium (2) to be degassed flowing through the vacuum container (3) from top to bottom and in the process being accelerated and decelerated in a multiple and alternating manner, and the vacuum container (3) being of rotationally symmetrical configuration, and a centrally arranged, vertical drive shaft (6) being situated in the vacuum container (3), which drive shaft (6) carries coaxially arranged rotary plates (7) which, with their outer circumference, form an overflow gap (9) with respect to the container inner wall (8) and which form a cascade stage (1 to n) in each case with a coaxially arranged, stationary run-off face (10) which is inclined with respect to the drive shaft (6) and starts from the container inner wall (8), **characterized in that** in each case one rotary plate (7) is provided on its outer circumference with a cylindrical screen area (13).

2. Apparatus according to Claim 1, **characterized in that** the run-off face (10) is arranged above the rotary plate (7).

3. Apparatus according to Claim 1, **characterized in that** the run-off face (10) is arranged below the rotary plate (7).

4. Apparatus according to Claim 1 and Claim 2 or 3, **characterized in that** a desired number (n) of cascade stages, but at least two stages, can be installed in the vacuum container (3) such that they are arranged coaxially above one another.

5. Apparatus according to at least one of Claims 1 to 4, **characterized in that** the individual cascade stages (1 to n) are produced at the same level.

6. Apparatus according to at least one of Claims 1 to 5, **characterized in that** each run-off face (10) is configured such that it is inclined towards the drive shaft (6), and exposes a passage opening (12) between itself and the drive shaft (6).

7. Apparatus according to at least one of Claims 1 to 6, **characterized in that** in each case one rotary plate (7) is provided with a gentle transition (17) towards the drive shaft (6), which transition (17) is formed in the shape of an annular throaty phase or a bevel.

8. Apparatus according to at least one of Claims 1 to 7, **characterized in that** the drive shaft (6) is driven by a drive unit (14), the rotational speed of which can be set to from 100 to 5000 rpm, preferably to from 100 to 1000 rpm.

9. Apparatus according to one of Claims 1 to 8, **characterized in that**, in order to discharge the practically gas-free medium (16) via the outlet (15) in its lower part, the vacuum container (3) is configured conically or with an oblique bottom face (11).

## Revendications

1. Dispositif pour dégazer une substance liquide à pâteuse (2), notamment une couleur d'enduction pour le revêtement de papier ou de carton, comprenant un récipient sous vide (3) qui présente une entrée (4) pour la substance (2) à dégazer ainsi qu'un raccord de vide ou un générateur de dépression (5) et une sortie (15) pour la substance dégazée (16), la substance (2) à dégazer traversant le récipient sous vide (3) de haut en bas et ce faisant étant accélérée et ralentie plusieurs fois et en alternance et le récipient sous vide (3) étant réalisé avec une symétrie de révolution et un arbre d'entraînement (6) vertical, disposé centralement se trouvant dans le récipient sous vide (3), l'arbre d'entraînement portant des plateaux rotatifs (7) disposés coaxialement qui forment, avec leur périphérie extérieure par rapport à la paroi interne du récipient (8) une fente de débordement (9) et qui forment à chaque fois avec une surface d'écoulement (10) disposée coaxialement, fixe et inclinée par rapport à l'arbre d'entraînement (6), qui part de la paroi interne (8) du récipient, un étage en cascade (1 à n),
**caractérisé en ce qu'**un plateau rotatif respectif (7) est pourvu sur sa périphérie extérieure d'une surface de tamis cylindrique (13).

2. Dispositif selon la revendication 1,
**caractérisé en ce que**
la surface d'écoulement (10) est disposée au-dessus du plateau rotatif (7).

3. Dispositif selon la revendication 1,
**caractérisé en ce que**
la surface d'écoulement (10) est disposée sous le plateau rotatif (7).

4. Dispositif selon la revendication 1 ainsi que la revendication 2 ou 3,
**caractérisé en ce**
**qu'**un nombre souhaité (n) d'étages en cascade, mais au moins deux étages, peuvent être incorporés dans le récipient sous vide (3) de manière disposée coaxialement les uns aux dessus des autres.

5. Dispositif selon au moins l'une quelconque des revendications 1 à 4,
**caractérisé en ce que**
les étages en cascade individuels (1 à n) sont fabriqués à la même hauteur.

6. Dispositif selon au moins l'une quelconque des revendications 1 à 5,
**caractérisé en ce que**
chaque surface d'écoulement (10) est réalisée de manière inclinée vers l'arbre d'entraînement (6) et libère une ouverture de débordement (12) entre elle et l'arbre d'entraînement (6).

7. Dispositif selon au moins l'une quelconque des revendications 1 à 6,
**caractérisé en ce**
**qu'**un plateau rotatif (7) est à chaque fois pourvu d'une transition douce (17) vers l'arbre d'entraînement (6), laquelle transition (17) est formée en forme de biseau conique annulaire ou en forme de chanfrein.

8. Dispositif selon au moins l'une quelconque des revendications 1 à 7,
**caractérisé en ce que**
l'arbre d'entraînement (6) est entraîné par une unité d'entraînement (14) dont la vitesse de rotation est ajustable à 100 à 5000 / min, de préférence à 100 à 1000 / min.

9. Dispositif selon l'une quelconque des revendications 1 à 8,
**caractérisé en ce que**
le récipient sous vide (3) est réalisé dans sa partie inférieure sous forme conique ou avec une surface de fond (11) oblique, pour l'évacuation de la substance (16) pratiquement exempte de gaz par le biais de la sortie (15).
